# EUROPEAN PATENT APPLICATION

(11) **EP 3 018 391 A1**
(43) Date of publication of application: **11.05.2016**
(21) Application number: 14820412.6
(22) Date of filing: 30.06.2014
(51) Int. Cl.: F16K 31/04, F25B 41/06

(54) **ELECTRIC EXPANSION VALVE**

(30) Priority: 03.07.2013 JP 2013139957
(71) Applicant: Denso Corporation, Kariya-shi, Aichi 448-8661 (JP); Fujikoki Corporation, Tokyo 158-0082 (JP)
(72) Inventor: HOTTA, Teruyuki, Kariya-city Aichi 448-8661 (JP); ITOU, Tetsuya, Kariya-city Aichi 448-8661 (JP); ARAI, Yusuke, Tokyo 158-0082 (JP); UMEZAWA, Hitoshi, Tokyo 158-0082 (JP)
(74) Representative: Klingseisen, Franz
(86) International application number: PCT/JP2014/003454
(87) International publication number: WO 2015/001779

(57) **Abstract**

In a first expansion valve (22), a pair of fitting side surfaces (823), which are formed in a screw member (82), is opposed to a pair of groove side surfaces (943), respectively, which are formed in a rotatable member (94). The fitting side surfaces (823) are rotated about an axis (CL1) by the groove side surfaces (943). An overlapping width (WDOL), throughout which the groove side surface (943) and the fitting side surface (823) are overlapped with each other, is larger than a female-thread inner diameter (D1) of a threaded hole (841), into which the screw member (82) is threadably engaged.

## Description

### CROSS REFERENCE TO RELATED APPLICATION

The present disclosure is based on and incorporates herein by reference Japanese Patent Application No. 2013-139957 filed on July 3, 2013.

### TECHNICAL FIELD

The present disclosure relates to an electric expansion valve.

### BACKGROUND ART

An electric expansion valve, which electrically opens and closes a fluid passage for conducting fluid, has been known. For example, one such electric expansion valve is disclosed in the Patent Literature 1. The electric expansion valve of the Patent literature 1 includes a speed reducing device that has a planetary gear mechanism interposed between an electric motor and a valve element that opens and closes the fluid passage.

In the electric expansion valve of the Patent Literature 1, an output of a rotor of the electric motor is inputted to a sun gear and is transmitted from the sun gear to planetary gears meshed with the sun gear. Two ring gears, which respectively have different numbers of teeth, are meshed with the planetary gears. One of the ring gears is a stationary gear, which is not rotatable, and the other one of the ring gears is rotatable as an output gear. Therefore, the drive force of the electric motor is transmitted from the planetary gears to the output gear, and the output gear is driven at a reduced rotational speed.

The output gear has a projection that is configured into a form of a flathead screwdriver. The output of the output gear, i.e., the rotation of the output gear is transmitted to a threaded shaft that has a groove portion, into which the projection of the output gear is fitted. The threaded shaft is moved together with a valve element in the axial direction, and the valve element opens and closes the fluid passage.

Here, the projection of the output gear is engaged with the groove portion of the threaded shaft. However, a clearance is present between the projection and the groove portion. That is, the groove portion is moved in the axial direction relative to the projection in response to the rotation of the output gear and the threaded shaft. Therefore, the projection and the groove portion are loosely fitted together. Thus, a hysteresis is generated at the time of rotating the threaded shaft through rotation of the output gear. For example, in a case where an electric signal, which drives the electric expansion valve of the Patent literature 1, is inputted to the electric motor to rotate the electric motor, when the hysteresis is large, an insensible region, in which the valve element cannot be move, is generated. That is, when the hysteresis is large at the time of transmitting the rotation of the electric motor, an operational accuracy for driving the valve element is assumed to be deteriorated.

### CITATION LIST

### PATENT LITERATURE

PATENT LITERATURE 1: JP2006-226369A (corresponding to US2006/0180780A1)

### SUMMARY OF INVENTION

The present disclosure is made in view of the above point, and it is an objective of the present disclosure to provide an electric expansion valve that can reduce a hysteresis in transmission of rotation of an electric motor.

In order to achieve the above objective, according to the present disclosure, there is provided an electric expansion valve including:
a main body portion, wherein a threaded hole, which has a central axis formed by one axis, and a fluid passage, through which circulating fluid flows, are formed in the main body portion;
a valve element that opens or closes the fluid passage through movement of the valve element in an axial direction of the one axis;
a rotatable member, wherein one surface, which faces in a direction that is perpendicular to the one axis, is formed in the rotatable member, and the rotatable member is rotated about the one axis by an electric motor;
an another-surface forming portion, wherein another surface, which is opposed to the one surface of the rotatable member, is formed in the another-surface forming portion, and the another-surface forming portion is rotated together with the rotatable member through rotation of the another surface, which is driven by the one surface about the one axis; and
a threaded shaft portion that is threadably engaged with the threaded hole, wherein the threaded shaft portion drives the valve element in the axial direction of the one axis through rotation of the threaded shaft portion integrally with the another-surface forming portion, wherein:
   an overlapping width, throughout which the one surface and the another surface are overlapped with each other in a view taken in the axial direction of the one axis, is larger than a female-thread inner diameter of the threaded hole.

With the above construction, the another surface, which is formed in the another surface forming portion, is opposed to the one surface of the rotatable member and is rotated about the one axis by the one surface. The overlapping width, throughout which the one surface and the another surface are overlapped with each other in the view taken in the axial direction of the one axis, is larger than the female-thread inner diameter of the threaded hole, with which the threaded shaft portion is threadably engaged. Therefore, the large overlapping width can be ensured. Furthermore, in order to transmit the rotation of the one surface of the rotatable member to the another surface of the another surface forming portion, a clearance between the one surface and the another surface needs to be eliminated, and the one surface and the another surface need to contact with each other. A required rotational angle, which is required to rotate the one surface relative to the another surface in order to eliminate the clearance, is reduced when the overlapping width is increased. Therefore, when the large overlapping width is ensured, the hysteresis can be reduced in the transmission of the rotation from the electric motor to the threaded shaft portion.

### BRIEF DESCRIPTION OF DRAWINGS

FIG. 1 is a diagram showing an entire structure of a vehicle air conditioning system having electric expansion valves of an embodiment of the present disclosure.
FIG. 2 is a cross-sectional view showing a structure of the first expansion valve of the vehicle air conditioning system of FIG. 1.
FIG. 3 is a perspective view of a speed reducing device of the first expansion valve of FIG. 2, indicating a partial cross section of the speed reducing device.
FIG. 4 is a cross-sectional view taken along line IV-IV in FIG. 2, showing a portion X of FIG. 2 in an enlarged scale.
FIG. 5 is a cross-sectional view taken along line V-V in FIG. 4.
FIG. 6 is a cross-sectional view indicating a cross section similar to that of FIG. 5 in a comparative example that is comparative to the first expansion valve of FIG. 2.
FIG. 7 is a diagram indicating a relationship between a cross-sectional area of a valve opening formed between a valve element and a valve seat in the first expansion valve of FIG. 2.
FIG. 8 is a cross-sectional view corresponding to FIG. 5 for describing a structure, in which a screw member and a rotation transmitting member are engaged with each other in another embodiment of the present disclosure, which is different from the first expansion valve of FIG. 2.

### DESCRIPTION OF EMBODIMENTS

An embodiment of the present disclosure will be described with reference to the accompanying drawings. In each of the following embodiments, which include the other embodiments described later, the same or similar components are indicated by the same reference numerals in the drawing(s).

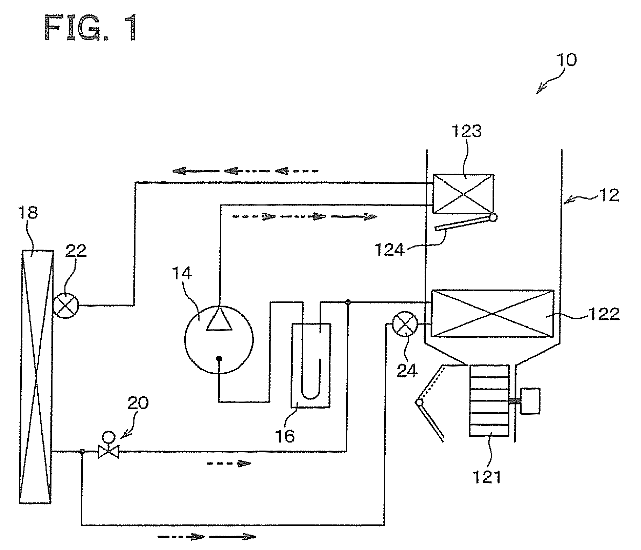

FIG. 1 is a diagram showing an entire structure of a vehicle air conditioning system 10, which has electric expansion valves of the present disclosure. The vehicle air conditioning system 10 is formed by a vapor compression refrigeration cycle. Chlorofluorocarbon refrigerant (e.g., R134a) is used as the refrigerant, which is circulated in the vapor compression refrigeration cycle. This vapor compression refrigeration cycle is a subcritical cycle, in which a pressure of the high pressure refrigerant does not exceed a critical pressure of the refrigerant.

The vehicle air conditioning system 10 has three operational modes, i.e., a cooling mode for cooling a vehicle cabin, a heating mode for heating the vehicle cabin, and a dehumidifying and heating mode for heating and dehumidifying the vehicle cabin. The operation of the vehicle air conditioning system 10 is selectively changed to one of these operational modes. In FIG. 1, a refrigerant flow in the cooling mode is indicated by a solid arrow, and a refrigerant flow in the heating mode is indicated by a dotted line, and a refrigerant flow in the dehumidifying and heating mode is indicated by a dot-dot-dash line.

The vehicle air conditioning system 10 includes a vehicle cabin interior air conditioning unit 12, a compressor 14, an accumulator 16, an outdoor heat exchanger 18, an electromagnetic opening and closing valve 20, a first expansion valve 22 and a second expansion valve 24. The vehicle cabin interior air conditioning unit 12 is placed in the inside of the vehicle cabin. The accumulator 16 separates the refrigerant into gas phase refrigerant and liquid phase refrigerant. The outdoor heat exchanger 18 exchanges the heat between the external air and the refrigerant. The solenoid opening and closing valve 20 opens and closes a refrigerant flow passage based on an electric signal supplied thereto.

The vehicle cabin interior air conditioning unit 12 includes an electric blower 121, an evaporator 122, an indoor heat exchanger 123 and an air mix door 124. The evaporator 122 is placed on a downstream side of the blower 121 in a flow of the air and evaporates the refrigerant through heat exchange between the refrigerant and the air. The indoor heat exchanger 123 is placed on a downstream side of the evaporator 122 in the flow of the air. The air mix door 124 adjusts the flow quantity of the air that flows to the indoor heat exchanger 123. The vehicle cabin interior air conditioning unit 12 blows the air, which is temperature controlled through the evaporator 122 and the indoor heat exchanger 123, into the vehicle cabin.

The compressor 14 receives a drive force from a vehicle drive engine (not shown) through, for example, an electromagnetic clutch to draw and compress the refrigerant.

In the cooling mode of the vehicle air conditioning system 10, the electromagnetic opening and closing valve 20 is placed into a valve closing state, and the air mix door 124 closes an air flow passage to the indoor heat exchanger 123. Therefore, the refrigerant, which is discharged from the compressor 14, passes through the indoor heat exchanger 123 without exchanging the heat at the indoor heat exchanger 123 and flows through the first expansion valve 22, the outdoor heat exchanger 18, the second expansion valve 24, the evaporator 122 and the accumulator 16 in this order and is returned from the accumulator 16 to the compressor 14.

At this time, the first expansion valve 22 is set to have a valve opening degree that does not restrict the refrigerant flow. The outdoor heat exchanger 18 functions as a condenser that condenses the refrigerant. The second expansion valve 24 is set to have a valve opening degree that restricts the refrigerant flow.

In the heating mode of the vehicle air conditioning system 10, the electromagnetic opening and closing valve 20 is placed into a valve opening state, and the second expansion valve 24 is placed into a valve closing state for blocking the refrigerant flow. Furthermore, the air mix door 124 is opened to enable flow of the air to the indoor heat exchanger 123. Therefore, the refrigerant, which is discharged from the compressor 14, passes through the indoor heat exchanger 123, the first expansion valve 22, the outdoor heat exchanger 18, the electromagnetic opening and closing valve 20 and the accumulator 16 in this order and is returned from the accumulator 16 to the compressor 14. Since the second expansion valve 24 is in the valve closing state, the refrigerant does not flow to the evaporator 122.

At this time, the indoor heat exchanger 123 functions as the condenser, and the first expansion valve 22 is placed to have a valve opening degree that restricts the refrigerant flow. Furthermore, the outdoor heat exchanger 18 functions as the evaporator.

In the dehumidifying and heating mode of the vehicle air conditioning system 10, the electromagnetic opening and closing valve 20 is placed into the valve closing state, and the air mix door 124 is opened to enable the flow of the air to the indoor heat exchanger 123. Therefore, the refrigerant, which is discharged from the compressor 14, passes through the indoor heat exchanger 123, the first expansion valve 22, the outdoor heat exchanger 18, the second expansion valve 24, the evaporator 122 and the accumulator 16 in this order and is returned from the accumulator 16 to the compressor 14.

At this time, the indoor heat exchanger 123 functions as the condenser, and the first expansion valve 22 and the second expansion valve 24 are set to have a valve opening degree that restricts the refrigerant flow. Furthermore, the outdoor heat exchanger 18 functions as the evaporator.

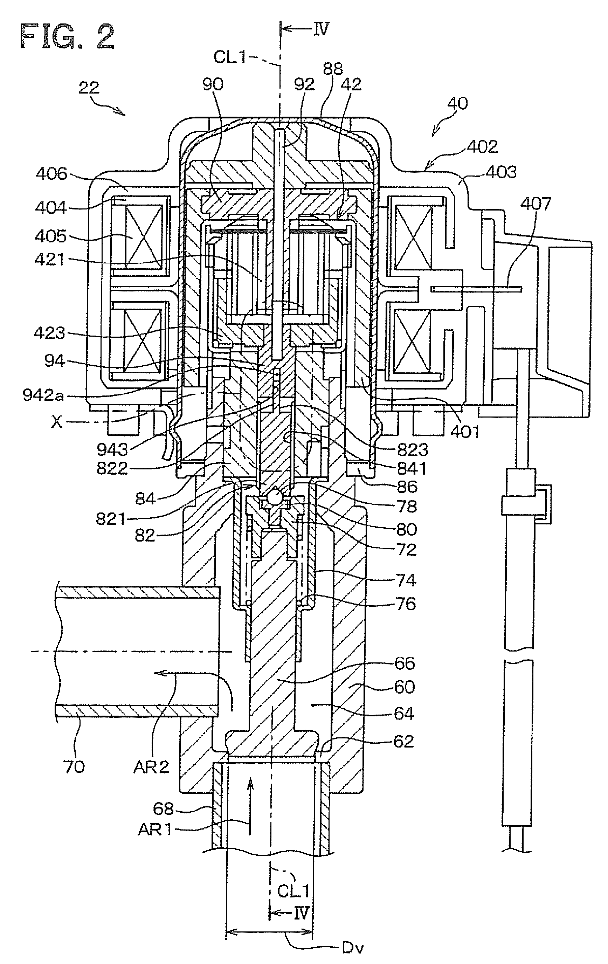

FIG. 2 is a cross-sectional view of the first expansion valve 22. The first expansion valve 22 includes an electric motor 40, which is, for example, a stepping motor, and a speed reducing device 42, which is connected to the electric motor 40. The speed reducing device 42 and a rotor 401 of the electric motor 40 are received into a can 88 described later, so that the first expansion valve 22 is a small electric expansion valve having a large output power and a high resolution.

As shown in FIG. 2, the first expansion valve 22 includes a valve main body 60, which has a valve seat 62. A valve chamber 64 is formed in the valve main body 60. A valve element 66 is placed in the valve chamber 64. The valve element 66 is seatable and liftable relative to the valve seat 62. Two conduits 68, 70, which are communicated with the valve chamber 64, are fixed to the valve main body 60 by, for example, brazing.

The valve element 66 is a member, which is configured into a rod form. The valve element 66 is movable in an axial direction of one axis CL1 relative to the valve main body 60. In the valve chamber 64, when the valve element 66 is lifted away from the valve seat 62 in the axial direction of the axis CL1, the refrigerant flows from the conduit 68 to the conduit 70, as indicated by arrows AR1, AR2 and is thereby depressurized and expanded. That is, the refrigerant is a fluid, which flows through the first expansion valve 22, and the valve chamber 64 is a fluid passage that conducts this refrigerant. The valve element 66 is moved in the axial direction of the axis CL1 to open and close the valve chamber 64, which serves as the fluid passage.

One end of the valve element 66, which is an end in the axial direction of the axis CL1, is seatable and liftable relative to the valve seat 62, and a valve appendix member 72 is joined to the other end of the valve element 66, which is the other end in the axial direction of the axis CL1. The valve appendix member 72 is fixed to the valve element 66. The valve element 66 is guided by a guide member 74, which is placed in the valve chamber 64 and is fixed to the valve main body 60, such that the valve element 66 is movable in the axial direction of the axis CL1. The valve element 66 and the valve appendix member 72 are urged by a coil spring 76 in a direction of lifting the valve element 66 away from the valve seat 62 in the axial direction of the axis CL1. A ball receiving member 80, which receives a ball 78, is inserted into and is fixed to an opposite side of the valve appendix member 72, which is opposite from the valve seat 62.

A screw member 82 contacts an opposite side of the ball 78, which is opposite from the valve seat 62 in the axial direction of the axis CL1. The screw member 82 has a threaded shaft portion 821, at which a male thread is formed. The screw member 82 transmits a thrust force in the axial direction of the axis CL1 by a screw mechanism. In other words, the screw member 82 drives the valve element 66 in the axial direction of the axis CL1 through rotation of the screw member 82.

A female-threaded member 84, which is configured into a tubular form, is fixed to an opposite side of the valve main body 60, which is opposite from the valve seat 62 in the axial direction of the axis CL1. Specifically, the female-threaded member 84 is fixed to a radially inner side of the valve main body 60. The valve main body 60 and the female-threaded member 84 correspond to a main body portion of the present disclosure. A threaded hole 841, which has a female thread, is formed in an inside of the female-threaded member 84. The threaded shaft portion 821 of the screw member 82 is threadably engaged with the threaded hole 841.

Furthermore, the can 88 is fixed to the opposite side of the valve main body 60, which is opposite from the valve seat 62 in the axial direction of the axis CL1, through a ring member 86, which is configured into an annular form. The can 88 is made of a non-magnetic metal material and is configured into a cylindrical tubular form having a bottom. A distal end portion of the can 88 is fixed to a radially outer side of the valve main body 60 by, for example, welding, through the ring member 86. An excitation device 402 of the electric motor 40 is installed on a radially outer side of the can 88.

The excitation device 402 of the electric motor 40 includes a resin mold 403, a coil 405 and a stator 406. The coil 405 is wound around a bobbin 404 that is installed in an inside of the resin mold 403. The stator 406 is excited through energization of the coil 405. The coil 405 is energized through leads 407.

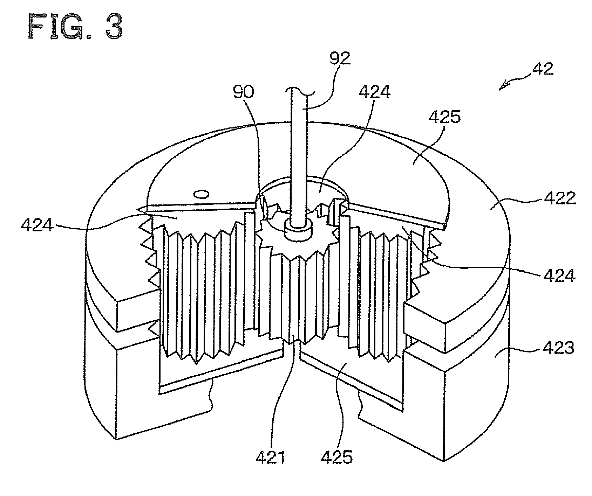

The rotor 401 of, for example, a permanent magnet type of the electric motor 40 is rotatably received in the inside of the can 88. The rotor 401 is made of a permanent magnet material, which is configured into a cylindrical tubular form. The rotor 401 is formed integrally with a rotation transmitting member 90 made of, for example, resin. A rotational force, which rotates the rotor 401, is transmitted to a sun gear 421 (see FIG. 3) of the speed reducing device 42 through the rotation transmitting member 90. The speed reducing device 42 is received on a radially inner side of the rotor 401.

The speed reducing device 42 is made of a planetary gear mechanism and achieves a large speed reducing ratio through use of a differential of the planetary gear mechanism. That is, the speed reducing device 42 substantially reduces the rotational speed of the rotation transmitted from the rotor 401 of the electric motor 40 and transmits the rotation of the reduced rotational speed to the screw member 82.

FIG. 3 is a perspective view of the speed reducing device 42, showing a partial cross section of the speed reducing device 42. As shown in FIG. 3, the speed reducing device 42 includes a sun gear 421, a stationary gear 422 (serving as a first ring gear), an output gear 423 (serving as a second ring gear) and a carrier 425. The carrier 425 rotatably supports three planetary gears 424, which are meshed with the gears 421, 422, 423.

The sun gear 421 is formed integrally with the rotation transmitting member 90. The sun gear 421, the rotation transmitting member 90 and the rotor 401 (see FIG. 2) are supported by the shaft 92 (see FIG. 2) such that the sun gear 421, the rotation transmitting member 90 and the rotor 401 are rotated integrally about the axis CL11.

The stationary gear 422 is non-rotatably connected to the valve main body 60. The output gear 423 includes a plurality of internal teeth, and the number of the internal teeth of the output gear 423 is different from the number of the internal teeth of the stationary gear 422. With the above described construction, the speed reducing device 42 transmits the rotation of the sun gear 421 to the output gear 423 after substantially reducing the rotational speed of the rotation outputted from the sun gear 421.

Referring back to FIG. 2, the output gear 423 opposes and slidably contacts the female-threaded member 84 in the axial direction of the axis CL11. A rotatable member 94 is press fitted into the radially inner side of the output gear 423. The output gear 423 and the rotatable member 94 are integrally and rotatably supported by the shaft 92. That is, the rotation of the rotor 401 of the electric motor 40 is transmitted to the output gear 423. Therefore, the rotatable member 94 is rotated by the electric motor 40.

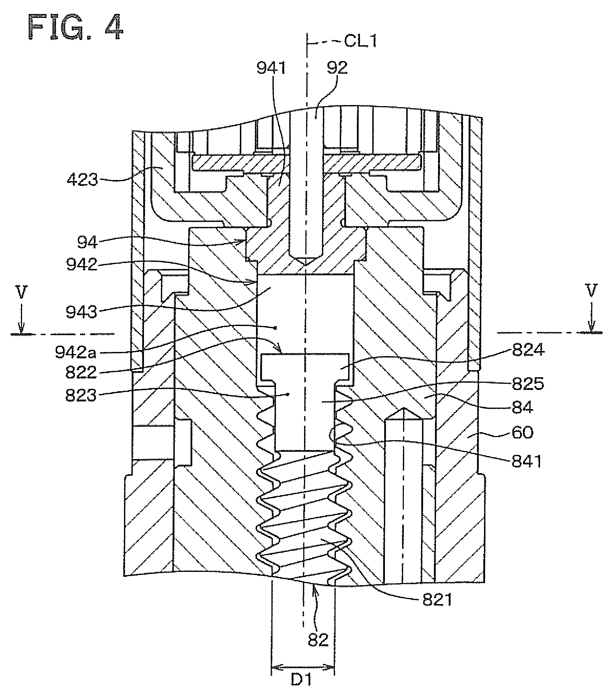

FIG. 4 is a cross-sectional view taken along line IV-IV in FIG. 2, showing a portion X of FIG. 2 in an enlarged scale. As shown in FIGS. 2 and 4, one end portion of the rotatable member 94 has a press-fitting portion 941, which is press fitted into the output gear 423, and the other end portion of the rotatable member 94 has a rotation transmitting portion 942 that is engaged with the screw member 82 to transmit the rotation to the screw member 82. The rotation transmitting portion 942 corresponds to an engaging portion of the present disclosure. Furthermore, FIG. 4 indicates placement of the screw member 82 in the valve closing state where the valve element 66 contacts the valve seat 62.

The rotation transmitting portion 942 is configured into a cylindrical form. A meshing groove 942a, which opens toward the valve seat 62 in the axial direction of the axis CL1, is formed in the rotation transmitting portion 942. The meshing groove 942a is formed by a pair of groove side surfaces (i.e., two groove side surfaces) 943, which are opposed to each other in a radial direction that is perpendicular to the axis CL11. Each of the pair of groove side surfaces 943 serves as one surface of the present disclosure. The meshing groove 942a corresponds to an engaging groove of the present disclosure.

In addition to the threaded shaft portion 821 described above, the screw member 82 includes a surface forming portion 822 that is configured into a planar plate form like a distal end portion of a flathead screwdriver. The surface forming portion 822 is an extended portion that extends from the threaded shaft portion 821 toward one side in the axial direction of the axis CL1, i.e., toward the rotation transmitting portion 942. Therefore, in the screw member 82, the threaded shaft portion 821 is rotated integrally with the surface forming portion 822 about the axis CL1 to drive the valve element 66 in the axial direction of the axis CL1 through the rotation of the threaded shaft portion 821.

The surface forming portion 822 is fitted into the meshing groove 942a of the rotatable member 94 and is movable in the axial direction of the axis CL1 relative to the meshing groove 942a. That is, the surface forming portion 822 is loosely fitted into the meshing groove 942a.

Specifically, the surface forming portion 822 includes a pair of fitting side surfaces (two fitting side surfaces) 823, which are opposed to the pair of groove side surfaces 943, respectively, of the meshing groove 942a. Therefore, the surface forming portion 822 rotates integrally with the rotatable member 94 when the fitting side surfaces 823 are rotated by the groove side surfaces 943 about the axis CL11. That is, since the surface forming portion 822 is fitted into the meshing groove 942a, the screw member 82 is rotated in response to the rotation of the rotatable member 94. Here, each of the fitting side surfaces 823, which form the surface forming portion 822, corresponds to another surface of the present disclosure. Furthermore, the surface forming portion 822 is an another-surface forming portion, which forms the another surface of the present disclosure.

As shown in FIG. 4, in a view taken in an opposing direction against the fitting side surface 823 (i.e., a direction that is perpendicular to the fitting side surface 823), the surface forming portion 822 has a T-shape, which is widened at a distal end part thereof, i.e., in a hammer shape. That is, the surface forming portion 822 includes a large width part 824, which is the distal end part of the surface forming portion 822, and a small width part 825, which is interposed between the large width part 824 and the threaded shaft portion 821.

In the view taken in the opposing direction against the fitting side surface 823, a width of the large width part 824, which is measured in a direction perpendicular to the axis CL1, i.e., a transverse width of the large width part 824 is larger than a female-thread inner diameter D1 of the threaded hole 841. In contrast, the transverse width of the small width part 825 is smaller than the female-thread inner diameter D1 of the threaded hole 841. This configuration is due to the fact of that the small width part 825 is insertable into the threaded hole 841, as shown in FIG. 4. Furthermore, the fitting side surfaces 823 extend over both of the large width part 824 and the small width part 825. The female-thread inner diameter D1 is a diameter of an imaginary circle formed by a radially inner end of a thread of the threaded hole 841.

Furthermore, as shown in FIG. 4, a groove depth of the meshing groove 942a, which is measured in the axial direction of the axis CL1, is set to a depth that always enables meshing of the surface forming portion 822 with the meshing groove 942a even upon movement of the screw member 82 in the axial direction of the axis CL1 in response to the rotation of the screw member 82. For example, the groove depth of the meshing groove 942a is set to be larger than a sum of an axial length of the large width part 824, which is measured in the axial direction of the axis CL1, and a maximum movable distance of the screw member 82 at the time of moving the screw member 82 in the axial direction of the axis CL1.

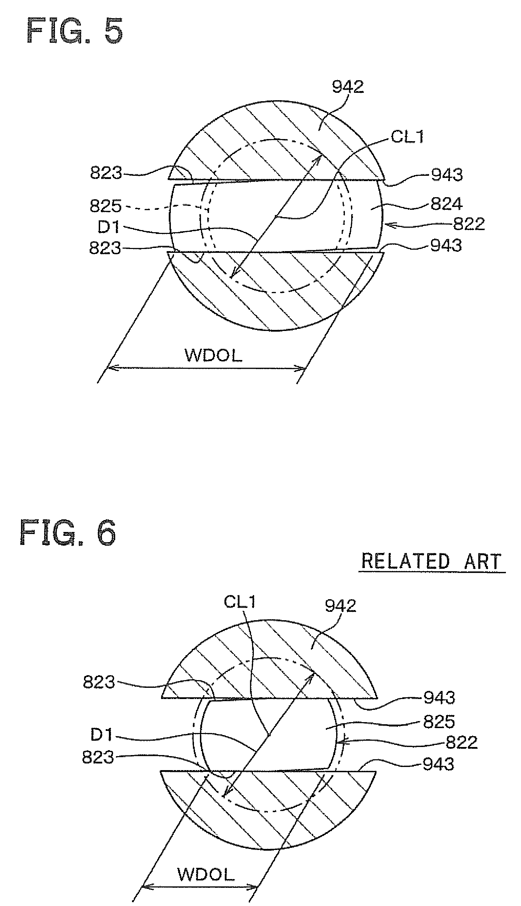

The transverse width of the groove side surface 943 of the rotatable member 94 is slightly larger than the transverse width of the large width part 824 of the screw member 82 and is larger than the female-thread inner diameter D1 of the threaded hole 841, as shown in FIG. 4. Furthermore, the transverse width of the large width part 824 is also larger than the female-thread inner diameter D1, as discussed above. Therefore, as shown in FIG. 5, an overlapping width WDOL, throughout which the groove side surface 943 and the fitting side surface 823 are overlapped with each other in the view taken in the axial direction of the axis CL1, is larger than the female-thread inner diameter D1 of the threaded hole 841. Furthermore, as should be understood from FIG. 5, the outer diameter of the rotation transmitting portion 942 is slightly larger than the transverse width of the large width part 824. Here, it should be noted that FIG. 5 is a cross sectional view taken along line V-V in FIG. 4.

Because of the above-described fitting between the meshing groove 942a and the surface forming portion 822, the rotation of the rotatable member 94 is transmitted to the screw member 82. The rotation of the screw member 82 is converted into the movement of the screw member 82 in the axial direction of the axis CL1, and the movement of the screw member 82 in the axial direction of the axis CL1 of the screw member 82 is transmitted to the valve element 66 through, for example, the ball 78, as shown in FIG. 2.

Now, the operation of the first expansion valve 22, which is constructed in the above described manner, will be described. First of all, the rotational speed of the rotation transmitted from the rotor 401 of the electric motor 40 is reduced and is transmitted to the rotatable member 94 through the speed reducing device 42. Next, since the meshing groove 942a of the rotatable member 94 is engaged with the surface forming portion 822 of the screw member 82, the rotation of the rotatable member 94 is transmitted to the screw member 82. At this time, the threaded shaft portion 821 is threadably engaged with the threaded hole 841, so that when the screw member 82 is rotated by the rotatable member 94, the screw member 82 is moved in the axial direction of the axis CL1 in response to the rotation of the screw member 82. The valve element 66 is urged against the screw member 82 in the axial direction of the axis CL1 by the urging force of the coil spring 76. Therefore, when the screw member 82 is moved in the axial direction of the axis CL1, the valve element 66 is moved in the axial direction of the axis CL1 in response to the movement of the screw member 82. In this way, the valve element 66 is moved in the axial direction of the axis CL1 by the rotation of the rotor 401 of the electric motor 40.

Furthermore, the rotation of the rotor 401 of the electric motor 40 is transmitted to the screw member 82 by the speed reducing device 42 at a large speed reducing ratio (e.g., a speed reducing ratio of about 1/45). Therefore, at the first expansion valve 22, the control of the valve opening degree can be finely performed at a high resolution.

The second expansion valve 24 shown in FIG. 1 has the same structure as that of the first expansion valve 22 except that a valve opening diameter of the second expansion valve 24 is smaller than a valve opening diameter Dv of the first expansion valve 22 (see FIG. 2).

As discussed above, in the first expansion valve 22 of the present embodiment, the pair of fitting side surfaces 823, which are formed in the screw member 82, is opposed to the pair of groove side surfaces 943, which are formed in the rotatable member 94, such that the fitting side surfaces 823 are rotated about the axis CL1 by the groove side surfaces 943. The overlapping width WDOL of FIG. 5, throughout which the groove side surfaces 943 and the fitting side surfaces 823 are overlapped with each other, is larger than the female-thread inner diameter D1 of the threaded hole 841, to which the threaded shaft portion 821 of the screw member 82 is threadably engaged. Therefore, for example, in comparison to a comparative example where the surface forming portion 822 does not have the large width part 824 and is formed only by the small width part 825, which has the width smaller than the female-thread inner diameter D1, as indicated in the cross section of FIG. 6, the larger overlapping width WDOL can be ensured.

Here, the surface forming portion 822 of the screw member 82 is loosely fitted into the meshing groove 942a of the rotatable member 94. Therefore, in order to transmit the rotation of the rotatable member 94 to the screw member 82, it is required that a minute clearance between the groove side surface 943 of the meshing groove 942a and the fitting side surface 823 of the surface forming portion 822 is eliminated, and thereby the groove side surface 943 and the fitting side surface 823 contact with each other. A rotational angle of the groove side surface 943 about the axis CL1 relative to the fitting side surface 823 required to eliminate the clearance is reduced when the overlapping width WDOL is increased. Thus, since the relatively large overlapping width WDOL is ensured, the hysteresis can be reduced at the time of transmitting the movement from the electric motor 40 to the valve element 66.

This hysteresis can be expressed by, for example, a rotational angle of the electric motor 40 or the number of input pulses for rotating the electric motor 40, which is required to start reverse movement of the valve element 66 in the axial direction of the axis CL1 in response to reverse rotation of the electric motor 40 at the time of reversing the rotation of the electric motor 40. Furthermore, FIG. 6 is a diagram showing a cross section of the comparative example of the present embodiment, which is similar to the cross section of FIG. 5.

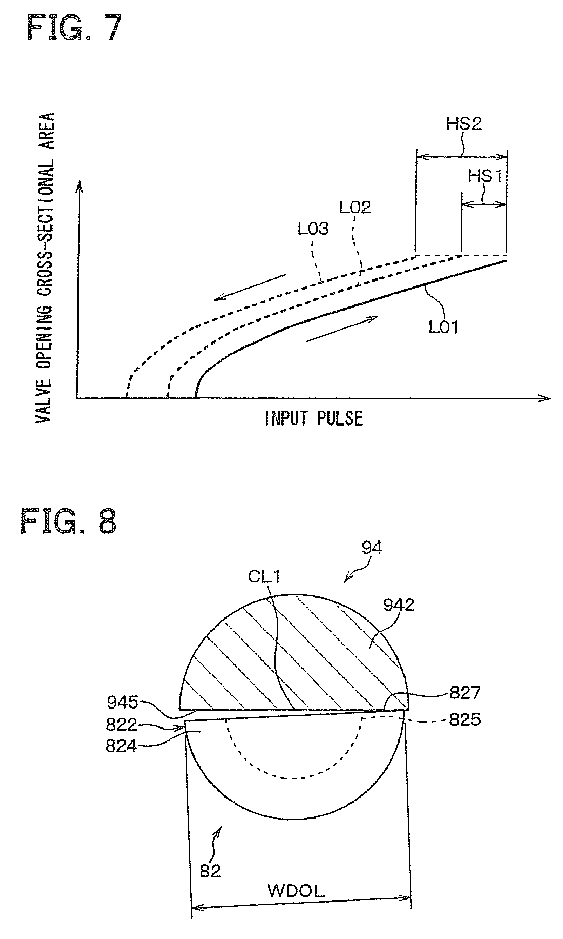

The reduction of the hysteresis in the present embodiment in comparison to the comparative example shown in FIG. 6 will be described with reference to a graph shown in FIG. 7. FIG. 7 indicates a relationship between a cross-sectional area of a valve opening, which is formed between the valve element 66 and the valve seat 62 (see FIG. 2), and the number of the input pulses supplied to the electric motor 40. In FIG. 7, a solid line L01 indicates a process of rotation of the electric motor 40 from the valve closing state in a rotational direction that is for lifting the valve element 66 from the valve seat 62, and each of dotted lines L02, L03 indicates a corresponding process of rotation of the electric motor 40 in an opposite rotational direction, which is opposite from the rotational direction that is for lifting the valve element 66 from the valve seat 62.

As shown in FIG. 7, in the case where the rotation of the electric motor 40 is reversed, a hysteresis indicated by an arrow HS1 is generated, and thereafter the cross-sectional area of the valve opening is progressively reduced as indicated by the dotted line L02 upon approaching of the valve element 66 toward the valve seat 62. In contrast, in the comparative example of FIG. 6, a hysteresis indicated by an arrow HS2 is generated, and thereafter the cross-sectional area of the valve opening is progressively reduced as indicated by the dotted line L03 upon approaching of the valve element 66 toward the valve seat 62. As is understood from the fact of that a width of the arrow HS1 is smaller than a width of the arrow HS2 in FIG. 7, in the present embodiment, the hysteresis is reduced by about 1/2 in comparison to the comparative example of FIG. 6. This is due to the fact of that the overlapping width WDOL, throughout which the groove side surface 943 and the fitting side surface 823 are overlapped with each other in the embodiment shown in FIG. 5, is larger than that of the comparative example of FIG. 6.

Furthermore, in the first expansion valve 22 of the present embodiment, the surface forming portion 822 of the screw member 82 includes the large width part 824 and the small width part 825. The transverse width of the large width part 824, which is measured in the direction perpendicular to the axis CL1 in FIG. 4, is larger than the female-thread inner diameter D1 of the threaded hole 841. The transverse with of the small width part 825 is smaller than the female-thread inner diameter D1 of the threaded hole 841. Therefore, the small width part 825, which is insertable into the threaded hole 841, is not threadably engaged with the threaded hole 841, and the threaded shaft portion 821 is the one that is mostly threadably engaged with the threaded hole 841. Thereby, the screw member 82 can be smoothly rotated.

Furthermore, according to the present embodiment, in order to ensure the required cooling performance of the vehicle air conditioning system 10, the valve opening diameter Dv (see FIG. 2) of the first expansion valve 22 needs to be increased to a diameter that is equal to conduit diameters of the conduits 68, 70. In the case where the valve opening diameter Dv is large, it is necessary to increase a torque for rotating the screw member 82 for driving the valve element 6. However, since the speed reducing device 42 is interposed between the electric motor 40 and the screw member 82, the screw member 82 can be rotated to drive the valve element 66 with a sufficient torque while the size of the electric motor 40 is made compact.

### (Other Embodiments)

(1) In the above embodiment, the surface forming portion 822 of the screw member 82, which is configured into the planar plate form, is fitted into the meshing groove 942a of the rotatable member 94. Therefore, the rotation of the rotatable member 94 is transmitted to the screw member 82. However, the structure, which transmits the rotation of the rotatable member 94 to the screw member 82, can be, for example, one shown in a cross-sectional view of FIG. 8. FIG. 8 is a cross-sectional view corresponding to FIG. 5 described above and is provided to describe the structure, in which the screw member 82 and the rotatable member 94 are engaged with each other.
   In the structure of FIG. 8, the cross section of the surface forming portion 822 of the screw member 82, which is seen in the axial direction of the axis CL1 of the surface forming portion 822, is configured into a semicircle. The surface forming portion 822 has a surface forming portion side surface 827, which faces in a radial direction that is perpendicular to the axis CL11. That is, in the surface forming portion 822, a chord of the semicircle described above is formed by the surface forming portion side surface 827. The surface forming portion 822 of FIG. 8 corresponds to the another-surface forming portion of the present embodiment.
   Furthermore, similar to the one discussed above, the rotation transmitting portion 942 of the rotatable member 94 is also configured into a semicircle, and the rotation transmitting portion 942 also includes a rotation transmitting portion side surface 945, which faces in the radial direction described above. That is, in the rotation transmitting portion 942, a chord of the semicircle is formed by the rotation transmitting portion side surface 945. The rotation transmitting portion 942 of FIG. 8 corresponds to the one-surface forming portion of the present embodiment.
   The surface forming portion side surface 827 and the rotation transmitting portion side surface 945 are opposed to each other. Both of the surface forming portion side surface 827 and the rotation transmitting portion side surface 945 are placed at a location, which overlaps with a center part of the threaded shaft portion 821 (see FIG. 4) in the axial direction of the axis CL1 in the view taken in the axial direction of the axis CL1. That is, the surface forming portion side surface 827 and the rotation transmitting portion side surface 945 are opposed to each other and contact with each other in the vicinity of the axis CL1.
   Even with this structure of FIG. 8 where the surface forming portion side surface 827 and the rotation transmitting portion side surface 945 are opposed to each other, the surface forming portion side surface 827 is rotated in response to the rotation of the rotation transmitting portion side surface 945. Therefore, the rotation of the rotatable member 94 is transmitted to the screw member 82. Furthermore, the overlapping width WDOL, which is similar to the overlapping width WDOL shown in FIG. 5, can be ensured. Therefore, similar to the embodiment described above, the hysteresis can be reduced at the time of transmitting the movement from the electric motor 40 to the valve element 66. The surface forming portion side surface 827 corresponds to the another-surface of the present disclosure, and the rotation transmitting portion side surface 945 corresponds to the one-surface of the present disclosure.
(2) In the above embodiment, the screw member 82 is fitted into the meshing groove 942a formed in the rotatable member 94. Alternatively, the meshing groove may be formed in the screw member 82, and the rotatable member 94 may be fitted into the meshing groove of the screw member 82.

The present disclosure is not limited to the above embodiment, and the above embodiment may be appropriately modified within the scope of the present disclosure. Furthermore, in the above embodiment, it should be understood that the components of the above embodiment are not necessarily indispensable except a case where the components are expressly stated as indispensable and a case where the components are regarded as indispensable in view of the principle. Furthermore, in the above embodiment, in the case where the number of the component(s), the value, the amount, the range, or the like is specified, the present disclosure is not limited to the number of the component(s), the value, the amount, or the like specified in the embodiment unless the number of the component(s), the value, the amount, or the like is indicated as indispensable or is obviously indispensable in view of the principle of the present disclosure. Furthermore, in the above embodiment, in the case where the material of the component(s), the shape of the component(s), and/or the positional relationship of the component(s) are specified, the present disclosure is not limited to the material of the component(s), the shape of the component(s), and/or the positional relationship of the component(s) unless the embodiment specifically states that the material of the component(s), the shape of the component(s), and/or the positional relationship of the component(s) is necessary, or the embodiment states that the present disclosure is limited in principle to the material of the component(s), the shape of the component(s), and/or the positional relationship of the component(s) discussed above.

## Claims

1. An electric expansion valve comprising:
a main body portion (60, 84), wherein a threaded hole (841), which has a central axis formed by one axis (CL1), and a fluid passage (64), through which circulating fluid flows, are formed in the main body portion (60, 84);
a valve element (66) that opens or closes the fluid passage (64) through movement of the valve element (66) in an axial direction of the one axis (CL1);
a rotatable member (94), wherein one surface (943, 945), which faces in a direction that is perpendicular to the one axis (CL1), is formed in the rotatable member (94), and the rotatable member (94) is rotated about the one axis (CL1) by an electric motor (40);
an another-surface forming portion (822), wherein another surface (823, 827), which is opposed to the one surface (943, 945) of the rotatable member (94), is formed in the another-surface forming portion (822), and the another-surface forming portion (822) is rotated together with the rotatable member (94) through rotation of the another surface (823, 827), which is driven by the one surface (943, 945) about the one axis (CL1); and
a threaded shaft portion (821) that is threadably engaged with the threaded hole (841), wherein the threaded shaft portion (821) drives the valve element (66) in the axial direction of the one axis (CL1) through rotation of the threaded shaft portion (821) integrally with the another-surface forming portion (822), wherein:
an overlapping width (WDOL), throughout which the one surface (943, 945) and the another surface (823, 827) are overlapped with each other in a view taken in the axial direction of the one axis (CL1), is larger than a female-thread inner diameter (D1) of the threaded hole (841).

2. The electric expansion valve according to claim 1, wherein:
an engaging groove (942a), into which the another-surface forming portion (822) is fitted, is formed in the rotatable member (94);
the one surface (943, 945) is formed in the rotatable member (94) as one of two groove side surfaces, which form the engaging groove (942a) and are opposed to each other; and
the another surface (823) is formed in the another-surface forming portion (822) as one of two surfaces, which are opposed to the two groove side surfaces, respectively.

3. The electric expansion valve according to claim 2, wherein the another-surface forming portion (822) includes:
a large width part (824) that has a width, which is measured in a direction perpendicular to the one axis (CL1) when the large width part (824) is viewed in an opposing direction perpendicular the another surface (827), wherein the width of the large width part (824) is larger than the female-thread inner diameter (D1) of the threaded hole (841); and
a small width part (825) that has a width, which is measured in the direction perpendicular to the one axis (CL1) when the small width part (825) is viewed in the opposing direction perpendicular to the another surface (827), wherein the width of the small width part (825) is smaller than the female-thread inner diameter (D1), and the small width part (825) is interposed between the large width part (824) and the threaded shaft portion (821).

4. The electric expansion valve according to claim 3, wherein:
the rotatable member (94) includes an engaging portion (942), which is configured into a cylindrical column form;
the engaging groove (942a) is formed in the engaging portion (942); and
the width of the large width part (842) is smaller than an outer diameter of the engaging portion (942).

5. The electric expansion valve according to claim 3 or 4, wherein a groove depth of the engaging groove (942a), which is measured in the axial direction of the one axis (CL1), is larger than a sum of an axial length of the large width part (824), which is measured in the axial direction of the one axis (CL1), and a maximum movable distance of the another-surface forming portion (822) at a time of moving the another-surface forming portion (822) in the axial direction of the one axis (CL1).

6. The electric expansion valve according to claim 1, wherein both of the one surface (945) and the another surface (827) are placed at a location, which overlaps with a center part of the threaded shaft portion (821) in the axial direction of the one axis (CL1) in a view taken in the axial direction of the one axis (CL1).

7. The electric expansion valve according to claim 1 or 6, wherein:
a cross section of the another-surface forming portion (822), which is perpendicular to the one axis (CL1), is configured into a semicircle that has a chord formed by the another surface (27); and
the rotatable member (94) includes a one-surface forming portion (942) that has a cross-section, which is perpendicular to the one axis (CL1) and is configured into a semicircle that has a chord formed by the one surface (945).
